# EUROPÄISCHE PATENTSCHRIFT

(11) **EP 2 369 725 B1**
(45) Veröffentlichungstag und Bekanntmachung des Hinweises auf die Patenterteilung: **26.09.2012**
(21) Anmeldenummer: 10157722.9
(22) Anmeldetag: 25.03.2010
(51) Int. Cl.: H02M 1/32, H02H 7/122, H02M 7/49

(54) **Überbrückungseinheit**
Short circuiting unit
Dispositif de court-circuit

(43) Veröffentlichungstag der Anmeldung: 28.09.2011
(73) Patentinhaber: ABB Schweiz AG, 5400 Baden (CH)
(72) Erfinder: Voegeli, Andreas, CH-5403, Endingen (CH)
(74) Vertreter: ABB Patent Attorneys

(56) Entgegenhaltungen:
- WO-A1-2008/067786
- WO-A1-2009/092621
- DE-A1- 10 323 220
- GB-A- 1 163 507
- US-A- 5 986 909

## Beschreibung

### Technisches Gebiet

Diese Erfindung betrifft das Gebiet der Leistungselektronik. Insbesondere betrifft diese Erfindung eine Überbrückungseinheit zum Kurzschließen einer Umrichterzelle, eine Umrichterzelle, einen Umrichter und ein Verfahren zum Kurzschließen einer Umrichterzelle.

### Stand der Technik

Bestimmte Typen von Umrichtern, beispielsweise modulare Multiniveauumrichter (modular multi-level converters - M2LC-Umrichter) können eine Mehrzahl von Umrichterzellen aufweisen, die die leistungselektronischen Schalter umfassen, mit denen der durch den Umrichter zu schaltende Strom geschaltet wird. Bei derartigen Zellen kann immer wieder das Problem auftreten, dass eine oder mehrere der Zellen eines Umrichters umgangen bzw. kurzgeschlossen werden müssen. Dies kann beispielsweise dann der Fall sein, wenn an einer Zelle oder mehreren Zellen ein Überstrom oder eine Überspannung entsteht, was durch einen externen Fehler (beispielsweise ein Erdfehler) oder durch einen internen Fehler der Umrichterzelle bedingt sein kein.

Im Falle eines erheblichen internen Fehlers der Umrichterzelle kann es vorteilhaft sein, wenn die Überbrückung der Umrichterzelle dauerhaft ist. Dafür wurden bereits ein pyrotechnischer Schließer (WO 2009/092621 A1), eine Vakuumschaltröhre (WO 2008/125494 A1), aber auch durchlegierende Halbleiterbauelemente (DE 103 232 20 A1, WO 2007/023064) vorgeschlagen.

Im Falle von externen Fehlern kann es notwendig sein, dass durch die Überbrückungseinheit kurze Stromstöße aufgenommen und an der Umrichterzelle vorbeigeleitet werden müssen. Für diesen Zweck wurde vorgeschlagen, beispielsweise einen Thyristor parallel zur Freilaufdiode der Umrichterschalter anzuordnen (WO 2008/067786 A1).

Nicht rückstellbare Überbrückungseinheiten (wie beispielsweise ein pyrotechnischer Schließer oder durchlegierende Bauelemente) müssen in aufwändiger Art und Welse aus den Umrichterzellen ausgebaut und durch neue noch nicht benutzte Überbrückungseinheiten ausgetauscht werden. Dies kann sehr zeit- und kostenintensiv sein.

Bei Thyristoren kann auch das Problem entstehen, dass die Überbrückungseinheit ohne externe Energie in den offenen Zustand zurückfällt. Ein kompletter Stromausfall des Umrichters würden in diesem Fall auch die Überbrückungseinheiten von defekten Zellen wieder in den nicht leitenden Zustand versetzen.

In der GB 1 163 507 A ist eine gattungsgemäss Überbrückungseinheit zum Kurzschliessen eines ersten und eines zweiten Eingangs einer Umrichterzelle eines Umrichters angegeben. Desweiteren offenbart die US 5,986,909 eine Überbrückungseinheit für eine Umrichterzelle mittels eines Relais.

### Darstellung der Erfindung

Es ist Aufgabe der Erfindung, einen Umrichter mit wartungsfreundlichen und zuverlässigen Umrichterzellen bereitzustellen.

Diese Aufgabe wird durch den Gegenstand der unabhängigen Ansprüche gelöst. Weitere Ausführungsformen der Erfindung ergeben sich aus den abhängigen Ansprüchen.

Ein erster Aspekt der Erfindung betrifft eine Überbrückungseinheit zum Kurzschließen eines ersten und eines zweiten Eingangs einer Umrichterzelle eines modularen Umrichters.

Der Umrichter kann ein Leistungsumrichter sein, der dazu ausgeführt ist, Ströme von mehreren zehn oder mehreren hundert Ampere und mehreren tausend Volt umzurichten. Unter Umrichten ist dabei der Vorgang zu verstehen, bei dem aus einer Gleichspannung eine Wechselspannung, aus einer Wechselspannung eine Gleichspannung oder aus einer Wechselspannung erster Frequenz eine Wechselspannung zweiter Frequenz erzeugt wird. Der Umrichter kann ein modularer Multiniveauumrichter (M2LC), ein indirekter bzw. direkter Umrichter sein. Diese beiden Arten von Umrichtern werden oft auch Chainlink-Umrichter genannt, da ihre Umrichterzellen kettenförmig angeordnet sind.

Eine Umrichterzelle kann eine unipolare Zelle (eine Halbbrücke) sein, beispielsweise bei einem indirekten M2LC-Umrichter, kann aber auch eine bipolare Zelle (eine Vollbrücke) sein, beispielsweise bei einem direkten M2LC-Umrichter oder einem Chain link-Umrichter. Eine Umrichterzelle weist in der Regel mehrere elektronische Schalter wie Thyristoren oder IGBTs auf. Darüber hinaus umfasst eine Umrichterzelle einen Energiespeicher, beispielsweise einen Kondensator. Zum Aufbau eines Umrichters kann eine Mehrzahl von Umrichterzellen über ihre Eingänge in Reihe geschaltet werden.

Gemäß einer Ausführungsform der Erfindung umfasst die Überbrückungseinheit ein bistabiles mechanisches Relais, wobei das bistabile mechanische Relais dazu ausgeführt ist, den ersten Eingang mit dem zweiten Eingang elektrisch zu verbinden und/oder die Verbindung wieder zu unterbrechen. Ein bistabiles mechanisches Relais verliert seinen aktuellen Schaltzustand nicht, wenn sein Steuereingang abgetrennt ist.

Weiterhin umfasst die Überbrückungseinheit einen leistungselektronischen Schalter. Der leistungselektronische Schalter kann dazu ausgeführt sein, den ersten Eingang mit dem zweiten Eingang der Umrichterzelle elektrisch zu verbinden bzw. die Verbindung wieder zu unterbrechen.

Ein leistungselektronischer Schalter kann gegenüber einem Relais um Größenordnungen schneller geschaltet werden. Beispielsweise kann die Überbrückungseinheit gleichzeitig ein Steuersignal an den leistungselektronischen Schalter und das bistabile mechanische Relais schicken, wonach zuerst nach einem sehr kurzen Zeitrahmen (Mikrosekunden) der leistungselektronische Schalter schließt und anschließend das bistabile mechanische Relais (Millisekunden) schließt.

Weiterhin umfasst die Überbrückungseinheit eine Ansteuerung zum Schalten des bistabilen mechanischen Relais und des leistungselektronischen Schalters.

Darüber hinaus umfasst die Überbrückungseinheit einen Energiespeicher zur Versorgung der Ansteuerung, des mechanischen Relais und des leistungselektronischen Schalters mit Energie. Ein derartiger Energiespeicher kann beispielsweise ein Kondensator sein, der beispielsweise über die an der Umrichterzelle anliegenden Spannung direkt oder indirekt geladen werden kann. Insbesondere kann es auch möglich sein, dass der Energiespeicher bzw. der Kondensator speziell durch Überspannung an der Umrichterzelle weiter geladen wird.

Weiterhin erfolgt die Ansteuerung der Überbrückungseinheit durch eine passive Überspannungserfassung zwischen X1 und X2. Unter einer passiven Überspannungserfassung kann dabei ein elektronisches Bauelement verstanden werden, das allein durch das Vorhandensein der Überspannung seinen internen Zustand ändert. Beispiele für solche Bauelemente sind Transil- bzw. Suppressor-Dioden.

Beispielsweise könnte die passive Überspannungserfassung wenigstens eine Suppressor-Diode umfassen bzw. eine Suppressor-Kette aus in Reihe geschalteter Suppressor-Dioden umfassen. Suppressor-Dioden werden bei einer bestimmten Schwellenspannung leitend, mit einer Kette von Suppressor-Dioden kann damit eine Schwellenspannung eingestellt werden, mit der die Kette leitend wird.

Es kann eine Kette von in Reihe geschalteter Suppressor-Dioden, die derart ausgewählt sind, dass sie bei einer vorbestimmten Schwellenspannung leitend werden, ein entsprechendes Signal erzeugen, um das bistabile mechanische Relais und/oder den leistungselektronische Schalter der Überbrückungseinheit zu schalten.

Darüber hinaus wird beim Überschreiten der Überspannung der Energiespeicher durch die Überspannung geladen oder zusätzlich geladen.

Außerdem weist die Ansteuerung einen weiteren elektronischen Schalter auf, der geschlossen wird, wenn eine Spannung am Energiespeicher einen vordefinierten Wert überschreitet und die Ansteuerung das bistabilen Relais und/oder der leistungselektronischen Schalter aus dem Energiespeicher mit Strom versorgt.

Weiterhin weist die Ansteuerung eine Hysterese auf, so dass beim Unterschreiten der Spannung am Energiespeicher das Relais und/oder der leistungselektronische Schalter weiter mit Strom aus dem Energiespeicher versorgt werden. Beispielsweise kann das Relais dann mit Strom bzw. Spannung aus dem Energiespeicher versorgt werden, wenn die Spannung am Energiespeicher einen bestimmten Wert überschreitet, der sicherstellt, dass das Relais so lange mit Strom versorgt wird, bis es in den geöffneten bzw. den ungeöffneten Zustand überwechseln konnte. Das Relais wird dann so lange aus dem Energiespeicher mit Spannung versorgt, bis die Spannung am Energiespeicher einen gewissen Wert unterschreitet und den Energiespeicher wieder vom Relais trennt. Eine Hysterese und eine Schwellwertermittlung für die Spannung am Energiespeicher kann beispielsweise durch einen Diac, der mit einer Suppressor-Diode in Reihe geschaltet ist, erreicht werden.

Gemäß einer Ausführungsform der Erfindung ist der leistungselektronische Schalter dazu ausgeführt, innerhalb von einigen bis einigen zehn Mikrosekunden zu schließen.

Gemäß einer Ausführungsform der Erfindung ist das bistabile mechanische Relais dazu ausgeführt, innerhalb von einigen bis einigen zehn Millisekunden zu schließen.

Auch wenn die Umrichterzelle beispielsweise auf Grund der geschlossenen Überbrückungseinheit nach einiger Zeit die interne Speisung verliert, behält das bistabile mechanische Relais seinen geschlossenen Zustand bei.

Die Überbrückungseinheit kann mit einfacher Technologie aufgebaut werden. Es sind keine pyrotechnischen Schließer oder Vakuumschaltröhren notwendig. Durch das bistabile mechanische Relais bleibt die Überbrückungseinheit nach Betätigung auch ohne externe Energie sicher in einem stabilen Zustand. Da das bistabile mechanische Relais und der leistungselektronische Schalter rückstellbar ausführbar sind, kann auch die Überbrückungseinheit rückstellbar aufgebaut werden. Darüber hinaus kann die Überbrückungseinheit mit der Umrichterzelle parallel zu deren Eingängen geschaltet werden, im Gegensatz zu durchlegierenden Halbleiterbauelementen. Zusätzlich kann die Überbrückungseinheit eine bipolare Überspannungsbegrenzung für eine hochohmige Umrichterzelle ermöglichen.

Durch die Überbrückungseinheit können zudem eine Vielzahl von Fehlerfällen auf Umrichterebene abgedeckt werden, insbesondere auch Erdfehler und Kurzschlüsse. Die Überbrückungseinheit kann zudem einen redundanten Pfad, zum Beispiel für einen DC-Link-Kurzschlusspfad bieten.

Gemäß einer Ausführungsform der Erfindung umfasst der leistungselektronische Schalter zwei antiparallele Thyristoren. Allgemeiner ist es auch möglich, dass die Überbrückungseinheit wenigstens einen Thyristor umfasst.

Gemäß einer Ausführungsform der Erfindung umfasst der leistungselektronische Schalter einen Triac.

Gemäß einer Ausführungsform ist die Ansteuerung dazu ausgeführt, ein Schließ- oder Rücksetzsignal für das Relais und/oder den leistungselektronischen Schalter zu empfangen und, in Reaktion auf das Schließsignal oder das Rücksetzsignal das Relais und/oder den leistungselektronischen Schalter zu schließen oder zu öffnen (d. h. zurückzusetzen).

Gemäß einer Ausführungsform der Erfindung ist die Ansteuerung dazu ausgeführt, eine Überspannung und/oder einen Überstrom zwischen dem ersten Eingang und dem zweiten Eingang der Umrichterzelle zu ermitteln. Dies kann beispielsweise dadurch geschehen, dass die Ansteuerung Messsignale einer Spannungsmesseinheit und einer Strommesseinheit an den ersten und/oder zweiten Ausgang der Umrichterzelle empfängt und diese weiterverarbeitet.

Gemäß einer Ausführungsform der Erfindung ist die Ansteuerung dazu ausgeführt, das Relais und/oder den leistungselektronischen Schalter zu schließen, wenn die Überspannung und/oder der Überstrom ermittelt werden. Beispielsweise kann die Ansteuerung die beiden Schaltelemente dann schließen, wenn die Spannung zwischen dem ersten und dem zweiten Eingang einen vorbestimmten Schwellwert überschreitet. Genauso kann die Ansteuerung die beiden Schaltelemente schließen, wenn ein Strom im ersten und/oder zweiten Eingang einen vorbestimmten Schwellwert überschreitet.

Gemäß einer Ausführungsform der Erfindung ist die Ansteuerung der Überbrückungseinheit dazu ausgeführt, (beispielsweise neben dem Überspannungschließsignal) ein externes Schließsignal und/oder Rückstellsignal zu empfangen oder zu erfassen. Dieses externe Schließsignal kann von der Diagnoseeinheit der Umrichterzelle oder von einer Systemschutzeinheit des Umrichters stammen. Gemäß einer Ausführungsform der Erfindung ist die Ansteuerung dazu ausgeführt, das Relais und/oder den leistungselektronischen Schalter zu schließen, wenn ein externes Schließsignal erfasst wurde.

Gemäß einer Ausführungsform der Erfindung ist die Ansteuerung dazu ausgeführt, das Relais und/oder den leistungselektronischen Schalter zu öffnen, wenn ein externes Rückstellsignal erfasst wurde.

Ein weiterer Aspekt der Erfindung betrifft eine Umrichterzelle.

Gemäß einer Ausführungsform der Erfindung umfasst die Umrichterzelle eine Überbrückungseinheit, so wie sie vorstehend und im Folgenden beschrieben wird.

Gemäß einer Ausführungsform der Erfindung umfasst die Umrichterzelle eine Diagnoseeinheit, die dazu ausgeführt ist, ein Schließsignal und/oder ein Rücksetzsignal für die Überbrückungseinheit zu übermitteln. Die Diagnoseeinheit kann zudem wichtige Mess- und Zustandsgrößen an die zentrale Umrichter- und Systemsteuerung liefern.

Gemäß einer Ausführungsform der Erfindung umfasst die Umrichterzelle eine Überstromabschaltung, die eine von der Überbrückungseinheit unabhängig agierende Überstromabschaltung sein kann. Beispielsweise kann die Überstromabschaltung im Falle einer Überspannung und/oder eines Überstroms die Halbleiter der Umrichterzelle abschalten.

Gemäß einer Ausführungsform der Erfindung kann die Umrichterzelle bei einem aufgeprägten Überstrom (bzw. einem Stoßstrom) innerhalb von Mikrosekunden den Fehlerstrom in den aktiven Schaltern der Umrichterzelle (IGBTs, IGCTs) selbstständig unterbrechen.

Gemäß einer Ausführungsform der Erfindung umfasst die Umrichterzelle eine Entsättigungsüberwachung eines IGBTs der Umrichterzelle. Das Erkennen derartiger Fehler oder Probleme kann auf einer Entsättigungsüberwachung von IGBTs oder Transistoren basieren. Es kann aber auch auf einer sehr schnellen Überstromerfassung im Falle von IGCTs oder anderen abschaltbaren Elementen basieren.

Ein weiterer Aspekt der Erfindung betrifft einen Umrichter.

Gemäß einer Ausführungsform der Erfindung umfasst der Umrichter eine Mehrzahl von Umrichterzellen, so wie sie vorstehend und im Folgenden beschrieben sind.

Gemäß einer Ausführungsform der Erfindung umfasst der Umrichter eine Systemschutzeinheit. Die Systemschutzeinheit kann dazu ausgeführt sein, bei einem Umrichter- und/oder Systemfehler alle, oder eine Auswahl, der leistungselektronischen Schalter und/oder der Relais der Überbrückungseinheiten der Umrichterzellen zu schließen und wahlweise nach der Fehlerklärung wieder zurückzustellen (d. h. zu öffnen). die dazu ausgeführt ist, jeder Umrichterzelle aus der Mehrzahl von Umrichterzellen ein Überbrückungssignal und/oder ein Rücksetzsignal zu übermitteln. In gewissen Fehlerfällen genügt die rasche und eigenständige Abschaltung auf dem Niveau der Umrichterzelle nicht und die Systemschutzeinheit sendet ein koordiniertes Überbrückungssignal an alle oder ausgewählte Zellen.

Im Folgenden werden Ausführungsbeispiele der Erfindung mit Bezug auf die beiliegenden Figuren detailliert beschrieben.

### Kurze Beschreibung der Zeichnungen

Fig. 1 zeigt einen Umrichter gemäß einem Ausführungsbeispiel der Erfindung.
Fig. 2 zeigt einen weiteren Umrichter gemäß einem Ausführungsbeispiel der Erfindung.
Fig. 3 zeigt eine Kette von Umrichterzellen gemäß einer Ausführungsform der Erfindung.
Fig. 4 zeigt eine unipolare Umrichterzelle gemäß einem Ausführungsbeispiel der Erfindung.
Fig. 5 zeigt eine bipolare Umrichterzelle gemäß einem Ausführungsbeispiel der Erfindung.
Fig. 6 zeigt eine Umrichterzelle gemäß einem Ausführungsbeispiel der Erfindung.
Fig. 7 zeigt eine Umrichterzelle gemäß einem Ausführungsbeispiel der Erfindung.
Fig. 8 zeigt ein Flussdiagramm für ein Verfahren zum Kurzschließen einer Umrichterzelle.
Fig. 9 zeigt ein Ausführungsbeispiel einer Überbrückungseinheit gemäß einem Ausführungsbeispiel der Erfindung.
Fig. 10 zeigt ein Diagramm mit Spannungsverläufen für die Überbrückungseinheit aus der Fig. 9 gemäß einem Ausführungsbeispiel der Erfindung.

Die in den Figuren verwendeten Bezugszeichen und ihre Bedeutung sind in zusammenfassender Form in der Liste der Bezugszeichen aufgeführt. Grundsätzlich sind identische oder ähnliche Teile mit den gleichen Bezugszeichen versehen.

### Wege zur Ausführung der Erfindung

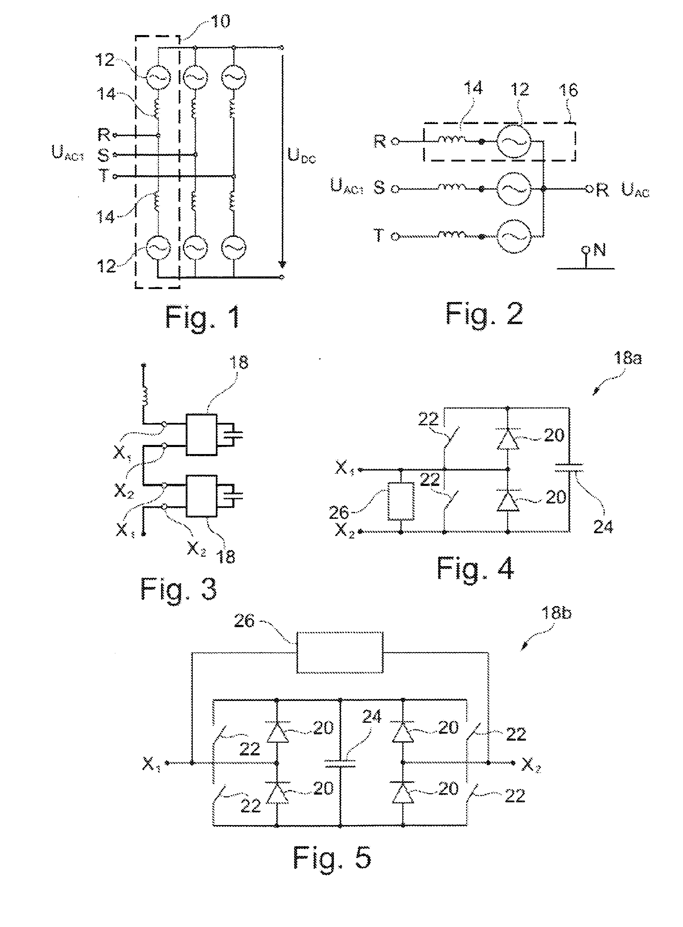

Fig. 1 zeigt einen indirekten Umrichter 10, der eine Gleichspannung U_{DC} in eine Wechselspannung U_{AC} umrichten kann. Dazu weist der indirekte Umrichter 10 zwei Umrichterzweige 12 auf, die die Eingänge des indirekten Umrichters 10, zwischen denen die Spannung U_{DC} anliegt, mit einem Ausgang, an dem die Spannung U_{AC} anliegt, über jeweils eine Drossel 14 verbinden. Die Umrichterzweige 12 umfassen jeweils eine Mehrzahl von in Reihe geschalteter Umrichterzellen.

Der in der Fig. 1 dargestellte indirekte Umrichter 10 ist dazu ausgeführt, eine Phase eines Stroms umzurichten. Es sind auch Umrichter bekannt, die einen Strom mit einer Mehrzahl von Phasen, beispielsweise Drehstrom (so wie in Fig. 1 dargestellt) umrichten können. Diese Umrichter weisen für jede Phase R, S, T einen Umrichter 10 auf, dessen Ausgang jeweils mit einer der Phasen und dessen Eingänge mit den Eingängen der anderen Umrichter verbunden sind.

Die Fig. 2 zeigt einen direkten Umrichter, welcher aus Eingangspannungen UAC1 der drei Eingangsphasen R, S, T der Frequenz 1 eine Ausgangsspannung UAC2 der Frequenz 2 erzeugt. Der direkte Umrichter 16 ist in der Lage, eine Phasenspannung von U_{AC1} einer ersten Frequenz mit einer Phasenspannung von U_{AC2} zu verbinden. Dazu weist der direkte Umrichter 16 wieder einen Umrichterzweig 12 auf, der die beiden Eingänge, an denen die beiden Spannungen U_{AC1} und U_{AC2} anliegen, über eine Drossel 14 verbindet. Entsprechend können auch mehrere Ausgangsspannungen UAC2 der Frequenz 2, beispielsweise für mehrphasige UAC2 Systeme erzeugt werden. Entsprechend kann auch die Ausgangsspannung UAC2 in der Nähe von 0 gehalten werden, um beispielsweise Blindleistungskompensationseinrichtungen zu realisieren.

In der Fig. 3 ist ein Umrichterzweig 12 aus einer Mehrzahl von Umrichterzellen 18 dargestellt. Jede der Umrichterzellen 18 hat einen ersten Eingang X1 und einen zweiten Eingang X2, die entweder mit dem Ein- bzw. Ausgang des Umrichterzweigs 12 oder mit einer weiteren Umrichterzelle 18 verbunden sind. Die Umrichterzellen 18 sind über ihre Ein- bzw. Ausgänge X1, X2 in Reihe geschaltet.

Die Fig. 4 zeigt eine unipolare Umrichterzelle 18a, die bei dem indirekten Umrichter 10 aus der Fig. 1 in dessen Umrichterzweigen 12 eingesetzt wird. Die Umrichterzelle 18a weist zwei Freilaufdioden 20, zwei leistungselektronische Schalter 22, einen Energiespeicher 24 in der Form eines Kondensators und eine Überbrückungseinheit 26 auf. Die leistungselektronischen Schalter 22 können beispielsweise Thyristoren, IGCTs oder IGBTs sein. Die Überbrückungseinheit 26 ist parallel zu den anderen Komponenten der Umrichterzelle 18a geschaltet und mit den Eingängen X1 und X2 der Umrichterzelle 18a verbunden.

Grundsätzlich ist die Überbrückungseinheit 26 ein Bauelement, das in einem ersten leitenden Zustand einen sehr niedrigen Widerstand hat, so dass ein Strom zwischen den Eingängen X1 und X2 durch die Überbrückungseinheit 26 und nicht durch die anderen baulichen Komponenten der Umrichterzelle 18a fließt. In einem zweiten nicht leitenden Zustand, in dem die Überbrückungseinheit 26 einen sehr hohen Widerstand aufweist, kann kein oder zumindest nur ein sehr geringer Strom durch das Überbrückungselement 26 fließen. In diesem Fall verhält sich die Umrichterzelle 18a so, als ob das die Überbrückungseinheit 26 nicht vorhanden wäre.

Fig. 5 zeigt eine bipolare Umrichterzelle 18b, die im Prinzip aus zwei unipolaren Umrichterzellen 18a aufgebaut ist, die sich den gleichen Energiespeicher 24 teilen. Die bipolare Umrichterzelle 18b kann in einem direkten Umrichter 16 eingesetzt werden. Weiter umfasst die bipolare Umrichterzelle 18b vier leistungselektronische Schalter 22 und vier Freilaufdioden 20. Die leistungselektronischen Schalter 22 können beispielsweise Thyristoren, IGCTs oder IGBTs sein. Darüber hinaus weist die Umrichterzelle 18b auch eine Überbrückungseinheit 26 auf, die parallel zu den anderen Komponenten der Umrichterzelle 18b parallel zu den Eingängen X1 und X2 der Umrichterzelle 18b geschaltet ist. Das Überbrückungselement 26 weist dabei dieselben Eigenschaften wie das Überbrückungselement 26 aus der Fig. 4 auf. Zudem kann der Einbau einer kleinen Induktivität zwischen der unipolaren oder bipolaren Umrichterzelle und dem Überbrückungselement 26 vorgesehen werden.

Alternativ können bei einer bipolaren Umrichterzelle zwei Überbrückungseinheiten eingesetzt werden, die jeweils einen äußeren Anschluss (X1, X2) mit dem gleichen Anschluss des Kondensators verbinden. Dann entspricht die bipolare Zelle genau zwei unipolaren Zellen, die an den beiden Anschlüssen des Kondensators verbunden wurden.

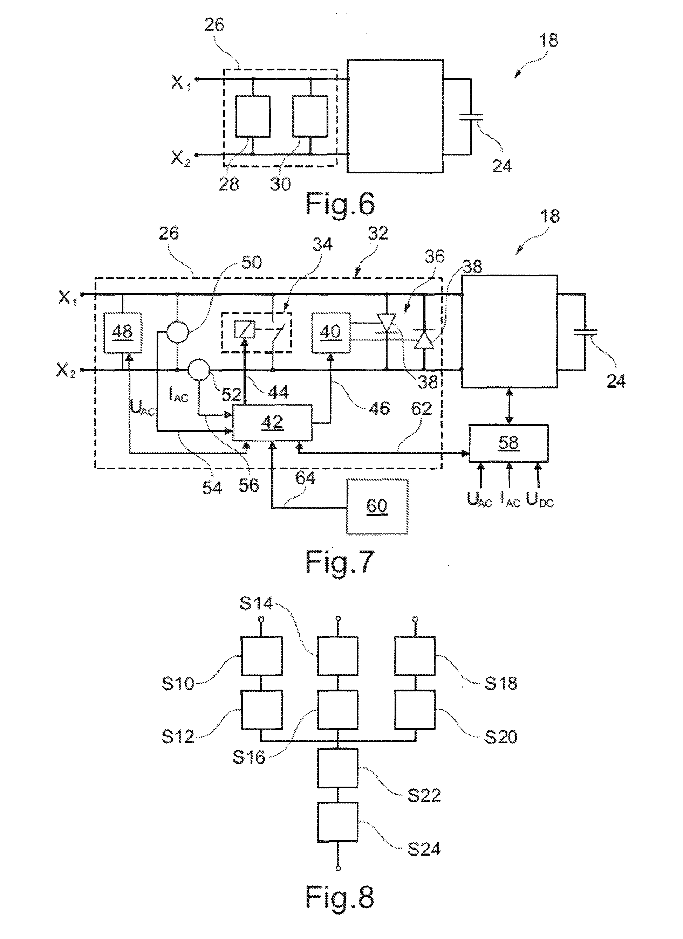

In der Fig. 6 ist eine Umrichterzelle 18, die eine unipolare Umrichterzelle 18a oder eine bipolare Umrichterzelle 18b sein kann, dargestellt. Die Überbrückungseinheit 26 weist dabei zwei parallel zueinander geschaltete Komponenten auf, ein Stoßstromelement 28 und ein Redundanzelement 30.

Das Stoßstromelement 28 stellt die Stoßstromfestigkeit der Umrichterzelle 18 bereit. Beispielsweise müssen im Falle verschiedener Umrichterfehler oder externer Systemfehler extern aufgeprägte Stoßströme über die Eingänge X1 und X2 durch die Umrichterzelle mit Hilfe des Stoßstromelements 28 kurzzeitig aufgenommen werden. Darüber hinaus können auch mit demselben Schutzelement zellinterne Stoßströme zum Schutz der Redundanzelemente aufgenommen werden. Dies ist beispielsweise möglich, um den Zwischenkreis mit dem Kondensator 24 zu entladen, wenn beispielsweise bei der unipolaren Umrichterzelle 18a aus der Fig. 4 der oben dargestellte leistungselektronische Schalter 22 geschlossen ist.

Das Redundanzelement 30 stellt die Redundanzfähigkeit der Umrichterzelle 18 bereit. Dabei kann unter Redundanzfähigkeit einer Umrichterzelle ein dauerhafter Kurzschluss der Zelle als Folge einer Zellenfehlfunktion verstanden werden.

In der Fig. 7 ist eine weitere Ausführungsform einer Überbrückungseinheit 26 dargestellt. Zwischen den Ein- bzw. Ausgängen X1 und X2 einer unipolaren oder bipolaren Umrichterzelle 18 ist eine intelligente, kombiniert mechanische und leistungselektronische Überbrückungseinheit 26 eingefügt, die den kontrollierten Abbau von Redundanz (Ausfall einer oder mehrerer Umrichterzellen 18) sowie die Stoßstromfähigkeit im Falle von externen Systemfehlern sicherstellen kann.

Die Überbrückungseinheit 26 umfasst ein kombiniert mechanisch-elektrisches Überbrückungselement 32 aus einem bistabilen mechanischen Relais 34 und einem leistungselektronischen Schalter 36, der zwei antiparallele Thyristoren 38 oder einen Triac umfasst. Der leistungselektronische Schalter 36 umfasst eine Gate-Steuerung 40 bzw. Gate-Drive 40, der die elektronischen Schaltelemente 38, beispielsweise Thyristoren 38, über deren Gates schalten kann. Das kombiniert mechanisch-elektrische Überbrückungselement 32 wird von einer Ansteuerung 42 angesteuert, die ein Öffnen- bzw. Schließsignal über eine erste Signalleitung 44 an das mechanische Relais 34 und ein Öffnen- bzw. Schließsignal über eine zweite Signalleitung 46 an die Gate-Steuerung 40 und somit an den leistungselektronischen Schalter 36 senden kann.

Die Ansteuerung 42 sowie die Komponenten des Überbrückungselements 32, das heißt das Relais 34, die Gate-Steuerung 40 und die beiden Thyristoren 38 werden von einem Energiespeicher 48 mit Energie versorgt. Der Energiespeicher 48 ist dazu ausgeführt, genügend Energie bereitzustellen, um das mechanische und leistungselektronische Überbrückungselement 32, sowie deren zugehörige Schutzintelligenz in der Form der Ansteuerung 42 im Fehlerfall mit Energie zu versorgen. Der Energiespeicher 48 ist parallel zu dem Relais 34 und den beiden Thyristoren 36 an die Eingänge X1 und X2 der Umrichterzelle 18 angeschlossen und kann aus dem an der Umrichterzelle 18 über diese beiden Eingänge X1, X2 anliegenden Spannung Energie beziehen. Es ist aber auch möglich, dass der Energiespeicher 48 Energie aus einer Stromversorgung der Umrichterzelle 18 bezieht.

Das an die Ausgänge X1 und X2 angeschlossene beispielsweise handelsübliche mechanische Relais 34 kann bezüglich der beim Einschalten angelegten Steuerspannung außerhalb der Spezifikation betrieben werden. Damit kann erreicht werden, dass die Schaltzeit des Relais 34 verkürzt wird. Darüber hinaus kann das Relais 34 bezüglich der Schaltspannung an den Kontakten außerhalb der Spezifikation betrieben werden, solange die funktional notwendigen Isolationsabstände eingehalten werden können. Das Relais 34 kann ein handelsübliches bistabiles Relais sein.

Die Ansteuerung 42 ist dazu ausgeführt, externe Schutzbefehle umzusetzen, die beispielsweise von einer Systemschutzeinheit 60 stammen, lokale Fehler auszuwerten, wie beispielsweise eine Überspannung, ein Überstrom oder eine Fehlermeldung der Umrichterzellendiagnose 58. Dazu kann Spannungsmessgerät 50 zwischen die beiden Eingänge X1, X2 geschaltet und/oder ein Strommessgerät 52 in den Eingang X1 bzw. den Eingang X2 geschaltet sein. Über eine Signalleitung 54 kann die Ansteuerung 42 die aktuelle Spannung U_{AC} zwischen den Eingängen X1 und X2 dem Spannungsmessgerät 50 und über die Signalleitung 56 den aktuellen Strom I_{AC} von dem Strommessgerät 52 empfangen.

Die Ansteuerung 42 kann darüber hinaus von einer Steuerungs- und Diagnostikeinheit 58 der Umrichtezelle 18 Öffnen- und Schließsignale über eine Signalleitung 62 empfangen. Zum Ermitteln von Fehlern an der Umrichterzelle 18 kann die Einheit 58 beispielsweise die Werte der Spannung U_{AC}, des Stroms I_{AC}, der Spannung U_{DC} und der Entsättigungsüberwachung (im Falle von IGBTs) oder Durchzünderfassung der Zelle (im Falle von IGCTs) empfangen. Die Ansteuerung 42 kann optional auch über die Signalleitung 62 ein Abschaltsignal an die Steuerung 58 der Umrichterzelle 18 senden.

Darüber hinaus ist es möglich, dass die Ansteuerung 42 Öffnen- bzw. Schließsignale von einer Systemschutzeinheit 60 empfängt, die den gesamten Umrichter 10, 16 überwacht, in den die Umrichterzelle 18 eingebaut ist.

Die Fig. 8 zeigt ein Flussdiagramm für ein Verfahren, mit dem die Überbrückungseinheit 26 die Umrichterzelle 18 schützen kann.

In einem Schritt S10 wird die Spannung U_{AC} und/oder der Strom I_{AC} zwischen den beiden Eingängen X1, X2 der Umrichterzelle 18 ermittelt.

In einem Schritt S12 bestimmt die Ansteuerung 42, ob ein Schwellwert für die Spannung U_{AC} und/oder den Strom I_{AC} überschritten ist. Ist dies der Fall, entscheidet die Ansteuerung 42, das mechanisch-elektronische Überbrückungselement 32 zu schließen. In einem Schritt S14 ermittelt die Diagnoseeinheit 58 einen internen Fehler der Umrichterzelle 18. In einem Schritt S16 sendet die Diagnoseeinheit 58 ein Schließsignal an die Ansteuerung 42.

In einem Schritt S18 stellt die Systemschutzeinheit 60 einen externen oder internen Fehler im Umrichter 10, 16 fest. Daraufhin sendet die Systemschutzeinheit 60 ein Schließsignal über die Signalleitung 62 an die Ansteuerung 42.

Die Schritte S10 und S 12, S14 und S16 sowie S18 und S20 können alternativ zueinander oder auch gleichzeitig erfolgen.

In einem Schritt S22 sendet die Ansteuerung 42 unter Berücksichtigung aller Informationen gegebenenfalls ein Schließsignal über die Signalleitung 44 an das Relais 34, das sich innerhalb von Millisekunden schließt und ein Schließsignal über die Signalleitung 46 an die Gate-Steuerung 40, das daraufhin die beiden Thyristoren 38 in ihren leitfähigen Zustand überführt. Die Thyristoren werden innerhalb von Mikrosekunden leitend.

Erkennt die Diagnoseeinheit 58 oder die Systemschutzeinheit 60, dass der interne Fehler behoben ist bzw. dass der interne bzw. externe Fehler des Umrichters 10, 16 nicht mehr vorhanden ist, senden sie ein Öffnen-Signal an die Ansteuerung 42, die dann in einem Schritt S24 ein Öffnen-Signal an das Relais und/oder die Gate-Steuerung 40 sendet, woraufhin die ausgewählten Schaltelemente 34 und/oder 36 wieder geöffnet werden und die Überbrückung des Überbrückungselements 26 gegebenfalls wieder aufgehoben wird.

Ein externer Fehler, der durch die Systemschutzeinheit 60 festgestellt werden kann, kann beispielsweise ein Erdfehler sein. Bei einem Erdfehler, oder im Allgemeinen bei einem Fehler, der von der Systemschutzeinheit 60 festgestellt wird, wird ein Schließsignal an alle Überbrückungseinheiten 26 aller Umrichterzellen 18 des Umrichters 18 gesendet. In diesen Fällen ist es angezeigt nur den leistungselektronischen Schalter zu schließen. Dies führt dazu, dass alle Umrichterzellen 18 des Umrichters durch die Überbrückungseinheit 26 überbrückt werden. Darüber hinaus werden in diesem Fall auch die Hauptunterbrecher des Umrichters 10, 16 durch die Systemschutzeinheit 60 aktiviert.

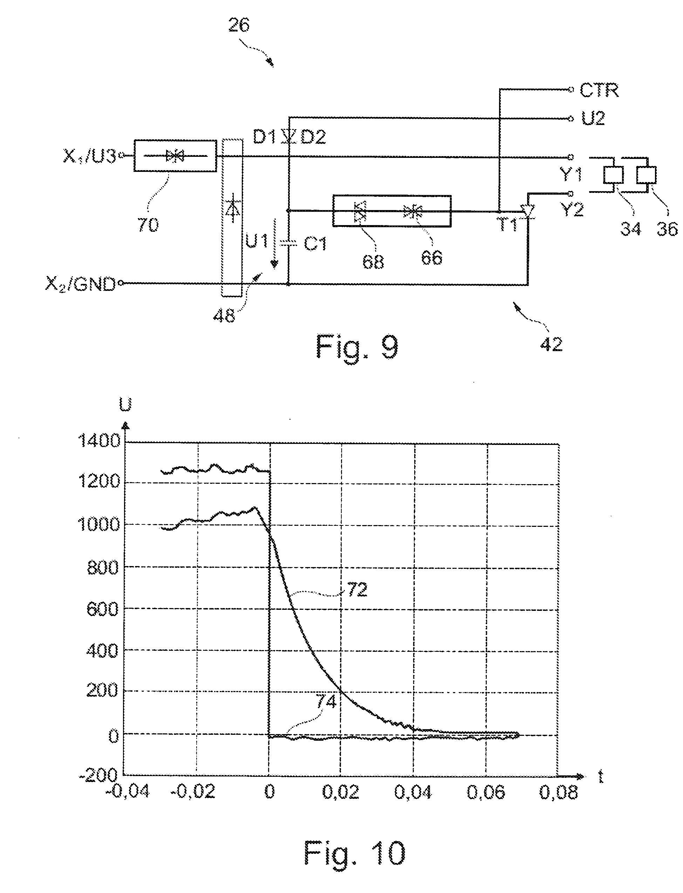

In der Fig. 9 ist ein Ausführungsbeispiel eines Teils einer Überbrückungseinheit 26 dargestellt. Über die Ausgänge Y1 und Y2 der in der Fig. 9 dargestellten Schaltung 26 kann eines oder mehrere bistabile Relais 34 und/oder ein oder auch mehrere Gate-Steuerungen 40 für leistungselektronische Schalter 36 angesteuert werden. Der Eingang U3 der Schaltung 26 ist mit dem Eingang X1 der Umrichterzelle 18, der Eingang GND mit dem Ausgang X2 der Umrichterzelle 18 verbunden.

Die zum gleichzeitigen Schalten notwendige Energie (beispielsweise von einem oder mehreren bistabilen Relais 34 und/oder eine oder mehrere leistungselektronische Schalter 36) wird in einem Kondensator C1 über die Spannung oder die Kapazität eingestellt. Der Energiespeicher 48 umfasst den Kondensator C1.

Der Stromkreis von Y1 über den Kondensator C1 zum Ausgang Y2 zum Auslösen des Relais 34 und/oder der Gate-Steuerung 40 wird mit einem Thyristor T1 geschlossen. Dadurch wird erreicht, dass nach einem Zündimpuls der Strom aus dem Kondensator C1 so lange fließt, bis der Kondensator C1 vollständig entladen ist oder der Stromkreis unterbrochen wird.

Die Energie für den Energiespeicher C1 wird entweder aus der zur Umrichterzelle gehörigen Spannungsversorgung über den Eingang U2 oder über eine Reihenschaltung von Transil-bzw. Suppressor-Dioden 70 (und anschließender Gleichrichtung) der an den Eingängen X1, X2 der Umrichterzelle anliegenden Spannung (das heißt parallel zu den Relaiskontakten des Relais 34 oder parallel zu den Thyristoren 38) entnommen.

Das Zünden des Thyristors T1 kann entweder über eine zu hohe Spannung am Eingang U3 bzw. X1 der Schaltung 26 oder über einen Steuerungseingang CTR erfolgen.

Zum Zünden des Thyristors T1 über den Steuereingang CTR, an den beispielsweise die Diagnoseeinheit 58 und/oder die Systemschutzeinheit 60 angeschlossen sein kann, wird die Ladung und somit die Spannung U1 am Kondensator C1 durch in in der Steuereinheit 58, 60 integrierte Netzteil auf dem Wert der Spannung U2 gehalten. Sobald die Steuerung 58, 60 den Befehl bzw. das Schließsignal gibt, die Umrichterzelle 18 zu überbrücken, wird der Steueranschluss des Thyristors T1 über den Eingang CTR direkt angesteuert und somit der Thyristor T1 in den leitenden Zustand gebracht. Als Folge wird der Kondensator C1 über die angeschlossenen bistabilen Relais 34 bzw. die Gate-Steuerungen 40 entladen.

Zum Zünden des Thyristors T1 über eine zu hohe Spannung U3 wird die Spannung U1 über dem Kondensator C1 abgegriffen und über eine Serienschaltung von Zener-Dioden 66 oder Transil-Dioden 66 und einem Diac 68 mit dem Steueranschluss des Thyristors T1 verbunden. Mit der Serienschaltung 66, 68 wird erreicht, dass ab einer bestimmten Schwellenspannung U1 ein Strom in den Steueranschluss des Thyristors T1 fließt und diesen zündet. Gleichzeitig verändert der Diac 68 seine Durchlasskennlinie derart, dass der Spannungsabfall darüber stark abnimmt. Dies erhöht den Ansteuerstrom für den Thyristor T1 und fügt der Auslöseschaltung 26 eine Hysterese hinzu. So wird erreicht, dass ein einmaliges Überschreiten der Schwellenspannung U1 zuverlässig die Auslösung bewirkt.

Die Ansteuerung 42 umfasst die Elemente 66, 68 und T1 umfassen.

Mit der Transil-Kette 70, die eine oder mehrere in Reihe geschaltete Transil-Dioden umfasst, kann die Schwellenspannung für das Aufladen des Kondensators C1 eingestellt werden. Die Schwellenspannung des Blocks 66, 68 sollte höher liegen als die Spannung U2, sonst würde im normalen Betriebsfall, wenn das Netzteil der angeschlossenen Umrichterzelle 18 die Spannung U2 liefert, der Zündmechanismus der Schwellenschaltung 26 bereits in Gang gesetzt.

Die Fig. 10 zeigt ein Diagramm von Spannungsverläufen, die bei einer Messung an der Überbrückungsschaltung 26 aus der Fig. 9 gewonnen wurden. Bei dem Diagramm ist nach rechts die Zeit t in Sekunden und nach oben die Spannung in Volt aufgetragen. Die Kondensatorspannung 72 ist dabei durch 10 zu dividieren.

Der Graph 72 zeigt den Spannungsverlauf über den Kondensator C1, während dem die Spannung U3 74 kontinuierlich erhöht wurde, bis zu einer Schwellenspannung, bei der die Transil-Kette 70 leitend wird und den Kondensator C1 auflädt, sobald die Schwellenspannung für die Zündung des Thyristors T1 erreicht wurde, die Spannung U3 kurzschließt und somit die Umrichterzelle 18 überbrückt.

Bezugszeichen in den Ansprüchen sind nicht als Einschränkung anzusehen.

### Bezugszeichenliste

- 10: indirekter Umrichter
- 12: Umrichterzweig
- 14: Drossel
- 16: direkte Umrichter
- 18: Umrichterzelle
- 18a: unipolare Umrichterzelle
- 18b: bipolare Umrichterzelle
- 20: Freilaufdiode
- 22: leistungselektronischer Schalter
- 24: Energiespeicher
- 26: Überbrückungseinheit
- 28: Stoßstromelement
- 30: Redundanzelement
- 32: Überbrückungselement
- 34: Relais
- 36: elektronischer Schalter
- 38: Thyristor
- 40: Gate-Steuerung
- 42: Ansteuerung
- 44: Signalleitung
- 46: Signalleitung
- 48: Energiespeicher
- 50: Spannungsmesser
- 52: Strommesser
- 54: Signalleitung
- 56: Signalleitung
- 58: Steuerung/Diagnoseeinheit
- 60: Systemschutzeinheit
- 62: Signalleitung
- 64: Signalleitung
- 66: Transildiode
- 68: Diac
- 70: Transil-Kette
- 72: Kondensatorspannung
- 74: Spannung zwischen X1 und X2

## Patentansprüche

1. Überbrückungseinheit (26) zum Kurzschließen eines ersten (X1) und eines zweiten (X2) Eingangs einer Umrichterzelle (18) eines modularen Umrichters (10), umfassend:
ein bistabiles mechanisches Relais (34);
einen leistungselektronischen Schalter (36);
eine Ansteuerung (42) zum Schalten des Relais (34) und des leistungselektronischen Schalters (36);
wobei das bistabile mechanische Relais (34) dazu ausgeführt ist, den ersten Eingang (X1) mit dem zweiten Eingang (X2) elektrisch zu verbinden:
wobei der leistungselektronische Schalter (36) dazu ausgeführt ist, den ersten Eingang (X1) mit dem zweiten Eingang (X2) elektrisch zu verbinden;
wobei ein Energiespeicher (48) zur Versorgung des mechanischen Relais (34), des leistungseleklronischen Schalters (36) und der Ansteuerung (42) mit Energie vorgesehen ist;
wobei die Ansteuerung (42) eine passive Überspannungserfassung (70) umfasst und beim Überschreiten der Überspannung der Energiespeicher (48) durch die Überspannung geladen wird;
wobei die Ansteuerung (42) einen weiteren elektronischen Schalter (T1) aufweist, der geschlossen wird, wenn eine Spannung am Energiespeicher (48) einen vordefinierten Wert überschreitet, und die Ansteuerung das bistabilen Relais (34) und/oder der leistungselektronischen Schalter (36) aus dem Energiespeicher mit Strom versorgt; und
wobei die Ansteuerung (42) eine Hysterese aufweist, so dass beim Unterschreiten der Spannung am Energiespeicher (48) das Relais (34) und/oder der leistungselektronische Schalter (36) weiter mit Strom aus dem Energiespeicher versorgt werden.

2. Überbrückungseinheit (26) nach Anspruch 1,
wobei der leistungselektronische Schalter (36) dazu ausgeführt ist, innerhalb von einigen bis einigen zehn Mikrosekunden zu schießen und/oder
wobei das bistabile mechanische Relais (34) dazu ausgeführt ist, innerhalb von einigen bis einigen zehn Millisekunden zu schließen.

3. Überbrückungseinheit (26) nach Anspruch 1 oder 2,
wobei der leistungselektronische Schalter (36) zwei antiparallele Thyristoren (38) umfasst und /oder
wobei der leistungselektronische Schalter (36) einen Triac umfasst.

4. Überbrückungseinheit (26) nach einem der vorhergehenden Ansprüche,
wobei die Ansteuerung (42) dazu ausgeführt ist, ein Schließsignal zu empfangen;
wobei die Ansteuerung (42) dazu ausgeführt ist, in Reaktion auf das Schließsignal das Relais (34) und/oder den leistungselektronischen Schalter (36) zu schießen.

5. Überbrückungseinheit (26) nach einem der vorhergehenden Ansprüche,
wobei die Ansteuerung (42) dazu ausgeführt ist, ein Rücksetzsignal zu empfangen;
wobei die Ansteuerung (42) dazu ausgeführt ist, in Reaktion auf das Rücksetzsignal das Relais (34) und/oder den leistungselektronischen Schalter (36) zu öffnen.

6. Überbrückungseinheit (26) nach einem der vorhergehenden Ansprüche,
wobei die Ansteuerung (42) dazu ausgeführt ist, eine Überspannung und/oder einen Überstrom zwischen dem ersten Eingang (X1) und dem zweiten Eingang (X2) zu ermitteln;
wobei die Ansteuerung (42) dazu ausgeführt ist, das Relais (34) und/oder den leistungselektronischen Schalter (36) zu schließen, wenn die Überspannung und/oder der überstrom vermittelt werden.

7. Überbrückungseinheit (26) nach einem der vorhergehenden Ansprüche,
wobei die Ansteuerung (42) dazu ausgeführt ist, ein externes Schließsignal und/oder Rückstellsignal zu erfassen;
wobei die Ansteuerung (42) dazu ausgeführt ist, das Relais (34) und/oder den leistungselektronischen Schalter (36) zu schließen, wenn ein externes Schließsignal erfasst wurde;
wobei die Ansteuerung (42) dazu ausgeführt ist, das Relais (34) und/oder den leistungselektronischen Schalter (36) zu öffnen, wenn ein externes Rückstellsignal erfasst wurde.

8. Umrichterzelle (18), umfassend:
eine Überbrückungseinheit (26) gemäß einem der Ansprüche 1 bis 7.

9. Umrichterzelle (18) nach Anspruch 8, weiter umfassend:
eine Überstromabschaltung (58) und/oder
eine Entsättigungsüberwachung eines IGBTs der Umrichterzelle (18);
wobei die Überstromabschaltung (58) dazu ausgeführt ist, Halbleiterelemente der Umrichterzelle (18) im Falle eines Überstromes abzuschalten.

10. Umrichter (10), umfassend:
eine Mehrzahl von Umrichterzellen (18) gemäß Anspruch 8 oder 9.

11. Umrichter (10) nach Anspruch 10, weiter umfassend:
eine Systemschutzeinheit;
wobei die Systemschutzeinheit ausgeführt ist, bei einem Umrichter- und/oder Systemfehler leistungslektronische Schalter der Uberbrückungseinheiten (26) der Umrichterzellen (18) zu schließen und wahlweise nach der Fehlerklärung wieder zurückzustellen.

## Claims

1. Bridging unit (26) for shorting a first input (X1) and a second input (X2) of a converter cell (18) of a modular converter (10), comprising:
a bistable mechanical relay (34);
a power-electronic switch (36);
a drive (42) for switching the relay (34) and the power-electronic switch (36);
wherein the bistable mechanical relay (34) is designed to electrically connect the first input (X1) to the second input (X2);
wherein the power-electronic switch (36) is designed to electrically connect the first input (X1) to the second input (X2);
wherein an energy store (48) is provided in order to supply power to the mechanical relay (34), the power-electronic switch (36) and the drive (42);
wherein the drive (42) comprises passive overvoltage detection (70) and, if the overvoltage is exceeded,
the energy store (48) is charged by the overvoltage;
wherein the drive (42) has a further electronic switch (T1), which is closed when a voltage on the energy store (48) exceeds a predefined value, and
the drive supplies current from the energy store to the bistable relay (34) and/or to the power-electronic switch (36), and
wherein the drive (42) has hysteresis, such that, if the voltage on the energy store (48) is undershot,
the relay (34) and/or the power-electronic switch (36) are/is still supplied with current from the energy store.

2. Bridging unit (26) according to Claim 1,
wherein the power-electronic switch (36) is designed to close within a few to a few tens of microseconds, and/or
wherein the bistable mechanical relay (34) is designed to close within a few to a few tens of milliseconds.

3. Bridging unit (26) according to Claim 1 or 2,
wherein the power-electronic switch (36) comprises two back-to-back parallel thyristors (38), and/or wherein the power-electronic switch (36) comprises a triac.

4. Bridging unit (26) according to one of the preceding claims,
wherein the drive (42) is designed to receive a closing signal;
wherein the drive (42) is designed to close the relay (34) and/or the power-electronic switch (36) in reaction to the closing signal.

5. Bridging unit (26) according to one of the preceding claims,
wherein the drive (42) is designed to receive a reset signal;
wherein the drive (42) is designed to open the relay (34) and/or the power-electronic switch (36) in reaction to the reset signal.

6. Bridging unit (26) according to one of the preceding claims,
wherein the drive (42) is designed to determine an overvoltage and/or an overcurrent between the first input (X1) and the second input (X2);
wherein the drive (42) is designed to close the relay (34) and/or the power-electronic switch (36) when the overvoltage and/or the overcurrent are/is determined.

7. Bridging unit (26) according to one of the preceding claims,
wherein the drive (42) is designed to detect an external closing signal and/or reset signal;
wherein the drive (42) is designed to close the relay (34) and/or the power-electronic switch (36) when an external closing signal has been detected; wherein the drive (42) is designed to open the relay (34) and/or the power-electronic switch (36) when an external reset signal has been detected.

8. Converter cell (18), comprising:
a bridging unit (26) according to one of Claims 1 to 7.

9. Converter cell (18) according to Claim 8, furthermore comprising:
overcurrent disconnection (58) and/or
desaturation monitoring of an IGBT in the converter cell (18);
wherein the overcurrent disconnection (58) is designed to disconnect semiconductor elements in the converter cell (18) in the event of an overcurrent.

10. Converter (10) comprising:
a plurality of converter cells (18) according to Claim 8 or 9.

11. Converter (10) according to Claim 10, furthermore comprising:
a system protection unit;
wherein the system protection unit is designed to close power-electronic switches in the bridging units (26) of the converter cells (18) in the event of a converter and/or system fault, and to selectively reset them again after the fault has been rectified.

## Revendications

1. Unité de pontage (26) pour court-circuiter une première (X1) et une deuxième (X2) entrée d'une cellule de convertisseur (18) d'un convertisseur (10) modulaire, comprenant :
un relais mécanique bistable (34) ;
un commutateur électronique de puissance (36) ;
une commande (42) pour faire commuter le relais (34) et
le commutateur électronique de puissance (36) ;
le relais mécanique bistable (34) étant réalisé pour relier électriquement la première entrée (X1) avec la deuxième entrée (X2) ;
le commutateur électronique de puissance (36) étant réalisé pour relier électriquement la première entrée (X1) avec la deuxième entrée (X2) ;
un accumulateur d'énergie (48) étant prévu pour l'alimentation en énergie du relais mécanique (34), du commutateur électronique de puissance (36) et de la commande (42) ;
la commande (42) comprenant un détecteur de surtension passif (70) et, en cas de dépassement de la surtension,
l'accumulateur d'énergie (48) étant chargé par la surtension ;
la commande (42) présentant un autre commutateur électronique (T1) qui est fermé lorsqu'une tension aux bornes de l'accumulateur d'énergie (48) dépasse une valeur prédéfinie, et la commande alimentant électriquement le relais bistable (34) et/ou le commutateur électronique de puissance (36) à partir de l'accumulateur d'énergie ; et
la commande (42) présentant une hystérésis de sorte qu'en cas de franchissement vers le bas de la tension aux bornes de l'accumulateur d'énergie (48), le relais (34) et/ou le commutateur électronique de puissance (36) continuent d'être alimentés électriquement à partir de l'accumulateur d'énergie.

2. Unité de pontage (26) selon la revendication 1, le commutateur électronique de puissance (36) étant réalisé de manière à se fermer en l'espace de quelques microsecondes à quelques dizaines de microsecondes et/ou
le relais mécanique bistable (34) étant réalisé de manière à se fermer en l'espace de quelques microsecondes à quelques dizaines de microsecondes.

3. Unité de pontage (26) selon la revendication 1 ou 2,
le commutateur électronique de puissance (36) comprenant deux thyristors (38) montés tête-bêche et/ou le commutateur électronique de puissance (36) comprenant un triac.

4. Unité de pontage (26) selon l'une des revendications précédentes,
la commande (42) étant réalisée pour recevoir un signal de fermeture ;
la commande (42) étant réalisée pour fermer le relais (34) et/ou le commutateur électronique de puissance (36) en réaction au signal de fermeture.

5. Unité de pontage (26) selon l'une des revendications précédentes,
la commande (42) étant réalisée pour recevoir un signal de réinitialisation ;
la commande (42) étant réalisée pour ouvrir le relais (34) et/ou le commutateur électronique de puissance (36) en réaction au signal de réinitialisation.

6. Unité de pontage (26) selon l'une des revendications précédentes,
la commande (42) étant réalisée pour déterminer une surtension et/ou une surintensité entre la première entrée (X1) et la deuxième entrée (X2) ;
la commande (42) étant réalisée pour fermer le relais (34) et/ou le commutateur électronique de puissance (36) lorsque la surtension et/ou la surintensité sont déterminées.

7. Unité de pontage (26) selon l'une des revendications précédentes,
la commande (42) étant réalisée pour détecter un signal de fermeture et/ou un signal de réinitialisation externe ;
la commande (42) étant réalisée pour fermer le relais (34) et/ou le commutateur électronique de puissance (36) lorsqu'un signal de fermeture externe a été détecté ;
la commande (42) étant réalisée pour ouvrir le relais (34) et/ou le commutateur électronique de puissance (36) lorsqu'un signal de réinitialisation externe a été détecté.

8. Cellule de convertisseur (18) comprenant :
une unité de pontage (26) selon l'une des revendications 1 à 7.

9. Cellule de convertisseur (18) selon la revendication 8, comprenant en outre :
un dispositif de coupure sur surintensité (58) et/ou un dispositif de surveillance de désaturation d'un IGBT de la cellule de convertisseur (18) ;
le dispositif de coupure sur surintensité (58) étant réalisé pour mettre hors circuit les composants semiconducteurs de la cellule de convertisseur (18) dans le cas d'une surintensité.

10. Convertisseur (10) comprenant :
une pluralité de cellules de convertisseur (18) selon la revendication 8 ou 9.

11. Convertisseur (10) selon la revendication 10, comprenant en outre :
une unité de protection du système ;
l'unité de protection du système étant réalisée pour, en présence d'une erreur du convertisseur et/ou du système, fermer les commutateurs semiconducteurs de puissance des unités de pontage (26) des cellules de convertisseur (18) et, au choix, les réinitialiser après la correction du défaut.
